# EUROPEAN PATENT APPLICATION

(11) **EP 2 782 177 A1**
(43) Date of publication of application: **24.09.2014**
(21) Application number: 12850407.3
(22) Date of filing: 18.10.2012
(51) Int. Cl.: H01M 8/02, C23C 18/32, C23C 18/42

(54) **COLLECTOR PLATE FOR FUEL CELLS AND METHOD FOR PRODUCING SAME**

(30) Priority: 14.11.2011 JP 2011248697
(71) Applicant: Nippon Light Metal Co., Ltd., Tokyo 140-8628 (JP)
(72) Inventor: NISHIKAWA, Yosuke, Shizuoka 421-3203 (JP); HATAZAWA, Yoshiyuki, Shizuoka 421-3203 (JP); TAGUCHI, Yoshihiro, Shizuoka 421-3203 (JP); NAKAGAWA, Toshihiro, Tokyo 140-8628 (JP); OOTA, Atsushi, Aichi 492-8144 (JP)
(74) Representative: Vossius & Partner
(86) International application number: PCT/JP2012/076939
(87) International publication number: WO 2013/073330

(57) **Abstract**

Provided are a collector plate for a fuel cell, which has low contact resistance and excellent corrosion resistance, and can be reliably used for a long period of time, while exhibiting excellent cost performance, and a method of producing the collector plate for a fuel cell. A collector plate for a fuel cell (1), which is provided on both ends of a cell stack in which a plurality of fuel cell units are stacked and is used for collecting current, includes : an aluminum substrate (2) formed of aluminum or an aluminum alloy; and an Ni plating film (4); a noble metal plating film (5) including one or more noble metals selected from the group consisting of Pd, Pt, Ag, Rh, Ir, Os, and Ru; and an Au plating film (6), the films being formed on one surface of the aluminum substrate (2).

## Description

### Technical Field

The present invention relates to a collector plate for a fuel cell, which is provided on both ends of a cell stack in which a plurality of fuel cell units are stacked, and is used for collecting current, and to a method of producing the collector plate for a fuel cell.

### Background Art

In general, in a fuel cell, current is collected by: stacking a plurality of fuel cell units each including a pair of electrodes, an anode and a cathode, an electrolyte film sandwiched between the electrodes, and separators provided on the anode side and the cathode side; and providing a collector plate on both ends of the cell stack in a stack direction.

For collecting current efficiently, the collector plate is required to have low contact resistance. Therefore, as the collector plate, a metal base having gold (Au) plated on a surface thereof is used. For example, copper collector plates each including an Au plating film are known (for example, see Patent Literatures 1 to 4). Moreover, it is known that, in addition to the copper plates, a stainless-steel plate or an aluminum plate is used as the base (for example, see Patent Literatures 5 and 6).

With a view to putting the fuel cell into practical use in a wide range of applications, how to reduce the cost is an important issue. Hence, there is a demand for an expensive Au plating film to be used as little as possible. Particularly owing to a recent rise in gold price, this tendency becomes more remarkable. However, a reduction in thickness of the Au plating film may lead to corrosion of the metal base or an increase in contact resistance with the separators, while an Au plating film having a thickness of from about 0.1 µm to 1 µm has been generally formed in the related art.

### Citation List

### Patent Literature

[PTL 1] JP 2003-217644 A (paragraph 0056)
[PTL 2] JP 2008-78104 A (paragraph 0090)
[PTL 3] JP 2008-146866 A (paragraph 0027)
[PTL 4] JP 2010-287542 A (paragraph 0149)
[PTL 5] WO 2003/088395 A1 (line 10 on page 3)
[PTL 6] JP 2009-152112 A (paragraph 0141)

### Summary of Invention

### Technical Problem

As described above, it is difficult for the related-art collector plates to satisfy cost performance and quality at the same time. In addition, the inventors of the present invention have conducted studies and have found that, even if the thickness of the Au plating film is simply secured, the contact resistance of the collector plate increases along with the use of the fuel cell in some cases.

Thus, an object of the present invention is to provide a collector plate for a fuel cell, which has low contact resistance and excellent corrosion resistance, and can be reliably used for a long period of time, while exhibiting excellent cost performance.

Moreover, another object of the present invention is to provide a method of producing a collector plate for a fuel cell, enabling the production of a collector plate for a fuel cell having the quality as described above at low cost.

### Solution to Problem

As a result of diligent studies for solving the problems of the related art, the inventors of the present invention have found that a nickel (Ni) plating film to be formed as an underlying film for an Au plating film causes an increase in contact resistance of a collector plate and inhibiting oxidation of Ni is particularly important. Then, the inventors perfected the present invention upon discovering the fact that a collector plate utilizing an aluminum substrate formed of aluminum or an aluminum alloy, in which an Au plating film is formed on one surface of the aluminum substrate via a noble metal plating film, can prevent deterioration in performance resulting from the Ni plating film, and can be reliably used for a long period of time even if the thickness of the Au plating film is reduced as compared to that of the related art.

That is, according to one embodiment of the present invention, there is provided a collector plate for a fuel cell, which is provided on both ends of a cell stack in which a plurality of fuel cell units are stacked, and is used for collecting current, the collector plate including: an aluminum substrate formed of aluminum or an aluminum alloy; and an Ni plating film; a noble metal plating film including one or more noble metals selected from the group consisting of Pd, Pt, Ag, Rh, Ir, Os, and Ru; and an Au plating film, the films being formed on one surface of the aluminum substrate.

According to another embodiment of the present invention, there is provided a method of producing a collector plate for a fuel cell, which is provided on both ends of a cell stack in which a plurality of fuel cell units are stacked and is used for collecting a current, the method including the steps of : subjecting an aluminum substrate formed of aluminum or an aluminum alloy to zinc substitution treatment by immersing the aluminum substrate in a zincate treatment bath; forming an Ni plating film on one surface of the obtained aluminum substrate; forming a noble metal plating film including one or more noble metals selected from the group consisting of Pd, Pt, Ag, Rh, Ir, Os, and Ru on the Ni plating film; and forming an Au plating film on the noble metal plating film.

In the present invention, an aluminum substrate formed of aluminum or an aluminum alloy is used as a metal base, and an Ni plating film, a noble metal plating film, and an Au plating film are formed on one surface of the aluminum substrate. As understood from the following standard oxidation-reduction potentials E⁰ (25°C) of the metals, A1 is the most less-noble metal of all metals and therefore is preferentially oxidized when the plating films are formed on one surface of the aluminum substrate even if the collector plate is exposed to a moist atmosphere during the use of the fuel cell. That is, even if the Ni plating film is exposed to an oxidation atmosphere through the Au plating film and the noble metal plating film, oxidation of the Ni plating film is suppressed because Al acts as a sacrificial anode and then electrons are supplied to the Ni plating film. Because of the structure of the collector plate, portions without the plating films are not involved in electrical conduction. Hence, even if such portions are oxidized, the performance of the collector plate is not affected.

Au³⁺ + 3e⁻ ⇄ Au E⁰=1.50 V

Pd²⁺ + 2e⁻ ⇄ Pd E⁰=0.99 V

Cu²⁺ + 2e⁻ ⇄ Cu E⁰=0.34 V

Ni²⁺ + 2e⁻ ⇄ Ni E⁰=-0.23 V

Al³⁺ + 3e⁻ ⇄ Al E⁰=-1.66 V

It should be noted that, for example, in the case of using a copper plate as the metal base, the suppressing effect on oxidation of Ni is not exhibited because Cu is a nobler metal than Ni and then the copper base does not serve as a sacrificial anode. On the other hand, when the entirety of the front and back surfaces of the aluminum substrate is covered with the plating films, exposure of the Ni plating film to an oxidation atmosphere may lead to an increase in contact resistance because Ni is the most less-noble metal among the plating films and thus Ni in the Ni plating layer is oxidized by a local cell reaction.

Aluminum or an aluminum alloy to be used as the aluminum substrate is not particularly limited, and examples thereof may include high-purity aluminum (JIS H4170; 1N99) and various aluminum alloys including A1100, A3003, A5052, A5005, A5652, A6063, A6061, A6101, and AA5252. Of those, from the viewpoints of corrosion resistance, formability, strength, and cost, 5000 series aluminum alloys are preferred.

Then, an Ni plating film is formed on one surface of the aluminum substrate. The Ni plating film mainly plays a role in preventing thermal diffusion of Al in the aluminum substrate onto the surface of the Au plating film as well as a role in preventing corrosion of the aluminum substrate. Moreover, when the Au plating film is subsequently formed by electroless plating treatment utilizing a displacement reaction, the Ni plating film is utilized in the displacement reaction.

The thickness of the Ni plating film is preferably from 1 µm to 10 µm, more preferably from 2 µm to 7 µm. When the thickness is less than 1 µm, non-plated portions may arise, resulting in exposure of the aluminum substrate after formation of the noble metal plating film and the Au plating film described below. On the other hand, the case where the thickness exceeds 10 µm is economically disadvantageous because of higher cost. In addition, the Ni plating film can be formed by a known method including electrolytic plating treatment and electroless plating treatment such as reduction plating or displacement plating. In view of cost performance, film thickness uniformity, or the like, electroless plating treatment is preferred. The plating treatment conditions, which vary depending on the type of the plating treatment, are preferably, for example, a bath temperature of from about 70 to 100°C and an immersion time of from about 10 min to 10 min in the case of electroless plating treatment.

After forming the Ni plating film, a noble metal plating film including one or more noble metals selected from the group consisting of Pd, Pt, Ag, Rh, Ir, Os, and Ru is formed. The noble metal plating film plays a role in preventing Ni from eluting from grain boundaries, pin holes, or the like of the Au plating film to thereby suppress precipitation of an oxide of Ni on the Au plating film as well as a role in further improving the corrosion resistance of the collector plate. Owing to the roles of the noble metal plating film, even if the thickness of the Au plating film formed on the noble metal plating film is reduced as compared to the related art, it is possible to achieve excellent corrosion resistance and suppress an increase in the contact resistance of the collector plate. From the viewpoint of corrosion resistance, the noble metal plating film is formed of preferably Pd, Rh, Pt, Ru, or an alloy of these noble metals, more preferably Pd, Rh, Ru, or an alloy of these noble metals.

The thickness of the noble metal plating film is preferably from 0.01 µm to 0.1 µm, more preferably from 0.02 µm to 0.08 µm. When the thickness is less than 0.01 µm, non-plated portions arise and the area where the Ni plating film is exposed becomes too large, which may result in insufficient corrosion resistance of the Ni plating film. On the other hand, the case where the thickness exceeds 0.1 µm is economically disadvantageous because of higher cost. In addition, in this case, the noble metal may fully cover the Ni plating film, to interfere with precipitation of Au, when the Au plating film described below is formed by a displacement reaction. That is, information of the Au plating film by electro less plating treatment utilizing a displacement reaction with Ni, setting the thickness of the noble metal plating film in the above-mentioned range is advantageous in that deterioration in performance of the collector plate caused by oxidation of Ni resulting from exposure of Ni can be suppressed because the noble metal plating film almost fully covers the Ni plating film and in that displacement Au plating can proceed through exposure of the Ni plating film from grain boundaries of the noble metal plating film.

In addition, in consideration of forming the Au plating film by electroless plating treatment utilizing a displacement reaction, the noble metal plating film is preferably formed so as to be a crystalline noble metal plating film. That is, by allowing the noble metal plating film to be crystalline to include grain boundaries, Ni to be used for formation of the Au plating film is supplied through the noble metal film. Such crystalline noble metal plating film is preferably formed by electroless plating treatment from the viewpoint of thickness uniformity and cost performance. The treatment conditions, which vary depending on the type of the noble metal to be employed, are, for example, in the case of a Pd plating film, preferably a bath temperature of from about 40 to 80°C and an immersion time of from about 1 min to 10 min.

Moreover, in obtaining the crystalline noble metal plating film, no co-deposited elements may be included, or one or more co-deposited elements selected from the group consisting of P, B, and W may be included in the range of from 0 to 3 mass%. That is, for obtaining the crystalline noble metal plating film, it is preferred to set the content of the one or more co-deposited elements within the range of from 0 to 3 mass%. When the content of the co-deposited element is too large, the noble metal plating film may be amorphous, whereas when the co-deposited element is present at an extremely small content, the effects of reducing the size of the grain boundaries and making the noble metal plating film more dense can be expected.

After forming the noble metal plating film, an Au plating film is formed thereon. The Au plating film is the most suitable from the viewpoint of reducing the contact resistance of the collector plate, and it is desired to increase the thickness of the Au plating film from the viewpoint of further improving the corrosion resistance or the like. However, the Au plating film increases the cost of the collector plate owing to its material. The present invention employs formation of the Au plating film via the noble metal plating film as described above, which enables a small thickness of the Au plating film as compared to the related art. In consideration of cost performance, the thickness of the Au plating film is preferably 0.1 µm or less. It should be noted that the thickness of the Au plating film is preferably 0.01 µm or more, because the use of an extremely thin Au plating film may often result in a defect such as a pin hole. In addition, from the viewpoint of uniformity of the appearance of the plating film or the like, the thickness of the Au plating film is preferably from 0.01 µm to 0.08 µm, more preferably from 0.02 µm to 0.06 µm.

The Au plating film is formed preferably by electroless plating treatment, particularly preferably by a displacement reaction utilizing Ni in the Ni plating film, because such treatment offers advantages in film uniformity, cost performance, or the like. Specifically, by obtaining a crystalline noble metal plating film in the step of forming a noble metal plating film, it is possible to utilize Ni eluting from the underlying Ni plating film through the grain boundaries of the noble metal plating film. The conditions of the electroless plating treatment utilizing displacement plating are preferably a bath temperature of from about 70 to 95°C and an immersion time of from about 10 min to 70 min.

In the formation of the Au plating film utilizing a displacement reaction, the displacement reaction starts from the grain boundaries of the noble metal plating film and a uniform Au plating film can be formed on the surface of the noble metal plating film. Hence, even if the thickness of the Au plating film is reduced as compared to the related art, more sufficient performance in terms of corrosion resistance and contact resistance can be expressed. Moreover, even if theAuplating film itself includes grain boundaries or some pin holes, the Au plating film can prevent Ni from eluting on the Au plating film, because the Au plating film covers the grain boundaries of the noble metal plating film. That is, it is possible to allow the surface of the Au plating film to be substantially free of an oxide of Ni (NiO) and prevent an increase in the contact resistance of the collector plate. It should be noted that the phrase "substantially free of an oxide of Ni " means a state in which formation of NiO is not supported by an intensity ratio between Ni and O measured by energy dispersive X-ray spectrometry (EDX) analysis as shown in Examples below.

In the production of the collector plate of the present invention, it is preferred to carry out zinc substitution treatment by immersing the aluminum substrate into a zincate treatment bath before the formation of the Ni plating film. For the zincate treatment bath, for example, an alkaline solution of zinc oxide including 4.1 mass% of zinc oxide, 25 mass% of sodium hydroxide, and the like can be used after diluted to 400 ml/L with ion-exchange water under the conditions of an immersion temperature of from about 15 to 30°C and an immersion time of from about 10 sec to 3 min. Further, for forming a denser zinc layer formed by zincate treatment, the aluminum substrate may be immersed in a zincate treatment bath to form a zinc layer on its surface once, followed by removal of the zinc layer by immersion in an acid washing bath, and then, immersion in a zincate treatment bath to form a zinc layer again. For the acid washing bath in this case, for example, an acid solution including nitric acid, sulfuric acid, hydrochloric acid, or the like as an acid at a concentration of from 10 to 65 mass% can be used under the conditions of an immersion temperature of from about 15 to 30°C and an immersion time of from about 10 sec to 1 min.

Further, the aluminum substrate maybe subjected to known pretreatment such as degreasing treatment or desmutting treatment before the zinc substitution treatment, or may be subj ected to press processing to form a connecting terminal or the like on the aluminum substrate. After the Au plating film is formed, the collector plate of the present invention can be obtained after washing with water and drying.

By forming an Ni plating film, a noble metal plating film, and an Au plating film on one surface of an aluminum substrate as in the present invention, it is possible to achieve excellent corrosion resistance and suppress an increase in contact resistance even in use for a long period of time. In the case where the thickness of the outermost Au plating film is from 0.01 µm to 0.1 µm and the thickness of the noble metal plating film is from 0.01 µm to 0.1 µm, the collector plate of the present invention has an anode current at a potential of 1 V of preferably 1 mA/cm² or less, more preferably 0.1 mA/cm² or less, which is measured in a corrosion current test using a 5% sulfuric acid solution for determining an anode polarization curve from a spontaneous potential to 2 V at a potential sweeping rate of 20 mV/min. When the contact resistance of the collector plate immediately after production is defined as 100, the contact resistance after left to stand in a constant-temperature and hign-humidity environment of a temperature of 85 °C and a relative humidity of 95% for 1,500 hr is preferably from 100 to 1,000, more preferably from 100 to 500.

### Advantageous Effects of Invention

According to one embodiment of the present invention, even if the thickness of the Au plating film is reduced as compared to the related art, it is possible to obtain the collector plate that has excellent corrosion resistance and whose contact resistance is suppressed from increasing. Therefore, the collector plate for a fuel cell of the present invention can be reliably used for a long period of time, while exhibiting excellent cost performance.

### Brief Description of Drawings

FIG. 1 is a side schematic view illustrating a collector plate for a fuel cell of the present invention.
FIGS. 2 are schematic views illustrating a test collector plate obtained in Examples and Comparative Examples subjected to measurement of contact resistance (FIG. 2(a) is a side view and FIG. 2(b) is a cross-sectional view).
FIG. 3 is a graph showing contact resistance of test collector plates obtained in Examples.
FIG. 4 is a graph showing contact resistance of test collector plates obtained in Examples and Comparative Example in a constant-temperature and high-humidity test.
FIG. 5 is a graph showing the result of a corrosion current test for test collector plates obtained in Examples and Comparative Example.
FIGS. 6 are optical micrographs (at a magnification of 300) of an Au plating film of a test collector plate obtained in Example 1 before and after a nitric acid exposure test (FIG. 6(a) is a micrograph before the test and FIG. 6 (B) is a micrograph after the test).
FIG. 7 shows the result of EDX qualitative analysis for a test collector plate obtained in Example 1 after left to stand in a constant-temperature and high-humidity environment of 85°C and a relative humidity of 95% for 750 hr.
FIG. 8 shows the result of SEM observation (at a magnification of 2, 000) of an Au plating film of a test collector plate obtained in Example 1 after left to stand in a constant-temperature and high-humidity environment of 85°C and a relative humidity of 95% for 750 hr.
FIG. 9 is a TEM image (at a magnification of 45, 000) showing cross sections of an Ni plating film and a Pd plating film of a test collector plate obtained in Example 1.
FIGS. 10 show the result of XRD evaluation for the effect of the content of a co-deposited element on the crystallinity of a Pd plating film (FIG. 10(a) is a chart in a case of including 1% of P and FIG. 10(b) is a chart in a case of including 5% of P).
FIGS. 11 are optical micrographs (at a magnification of 300) of an Au plating film of a test collector plate obtained in Comparative Example 1 before and after a nitric acid exposure test (FIG. 11 (a) is a micrograph before the test and FIG. 11 (B) is a micrograph after the test).
FIG. 12 shows the result of EDX qualitative analysis for a test collector plate obtained in Comparative Example 1 after left to stand in a constant-temperature and high-humidity environment of 85°C and a relative humidity of 95% for 750 hr.
FIG. 13 shows the result of SEM observation of an Au plating film of a test collector plate obtained in Comparative Example 1 after left to stand in a constant-temperature and high-humidity atmosphere of 85°C and a relative humidity of 95% for 750 hr.
FIGS. 14 are optical micrographs (at a magnification of 300) showing the result of a nitric acid exposure test performed for confirming the sacrificial anode action of an aluminum substrate (FIG. 14 (a) is for a test collector plate of Example and FIG. 14 (b) is for a comparative test collector plate).

### Description of Embodiments

Hereinafter, preferred embodiments of the present invention are specifically described by way of Examples and Comparative Examples.

### Examples

### (Example 1)

### [Production of test collector plate]

An aluminum substrate of 30 mmx60 mm×3 mm in thickness was cut out from a 5052-H34 aluminum alloy material having a thickness of 3 mm and subjected to degreasing cleaning at 55°C for 5 min by immersion in a solution prepared by diluting a weak alkaline degreasing agent (trade name: Top Alclean 161 manufactured by OKUNO CHEMICAL INDUSTRIES CO. , LTD.) to a concentration of 30 g/L. After washed with water, the aluminum substrate was subjected to desmutting treatment at 25°C for 30 sec by immersion in a solution prepared by diluting a desmutting solution including nitric acid (trade name : Top Desmut N-20 manufactured by OKUNO CHEMICAL INDUSTRIES CO., LTD.) to a concentration of 100 ml/L.

Next, after washed with water, one surface and outer end surfaces of the aluminum substrate were masked and then subj ected to zinc substitution treatment. Specifically, the aluminum substrate was immersed in a zincate treatment bath at 22°C for 30 sec, the bath being prepared by diluting a zinc treatment agent including 25 mass% of sodium hydroxide and 4.1 mass% of zinc oxide (trade name : Substar Zn-8 manufactured by OKUNO CHEMICAL INDUSTRIES CO., LTD.) to a concentration of 400 ml/L. After washed with water, the aluminum substrate was immersed in an acid washing bath of a nitric acid solution having a concentration of 62 mass% at 25°C for 30 sec, thus removing a zinc layer formed by zincate treatment formed on the aluminum substrate. After washed with water, the aluminum substrate was immersed in the zincate treatment bath at 22°C for 30 sec again, thus forming a zinc layer formed by zincate treatment having a thickness of about 1 µm.

Next, after washed with water, the aluminum substrate was subjected to electroless Ni plating treatment involving immersion at 90°C for 35 min in an Ni plating bath prepared by mixing a chemical agent including 19 mass% of sodium hypophosphite and 3.9 mass% of acetic acid (trade name : Top Nicoron RCH-MLF manufactured by OKUNO CHEMICAL INDUSTRIES CO., LTD.) with an Ni plating solution including 36 mass% of nickel acetate (trade name: Top Nicoron RCH-1 LF manufactured by OKUNO CHEMICAL INDUSTRIES CO., LTD.) after diluting the chemical agent and the Ni plating solution to a concentration of 130 ml/L and 40 ml/L, respectively. Thus, an Ni plating film having a thickness of 5 µm was formed on a surface opposite to the masked surface in the aluminum substrate.

After washed with water, the aluminum substrate after the formation of the Ni plating film was subjected to electroless Pd plating treatment involving immersion at 60°C for 5 min in a Pd plating bath prepared by mixing a chemical agent including a chelate agent (trade name: PALLA TOP LP-M manufactured by OKUNO CHEMICAL INDUSTRIES CO. , LTD.), a chemical agent including 7 mass% of a palladium salt (trade name: PALLA TOP LP-A manufactured by OKUNO CHEMICAL INDUSTRIES CO., LTD.), a chemical agent including 41 mass% of a reducing agent (trade name: PALLA TOP LP-B manufactured by OKUNO CHEMICAL INDUSTRIES CO., LTD.), and a chemical agent including 4.4 mass% of a complexing agent (trade name: PALLA TOP LP-C manufactured by OKUNO CHEMICAL INDUSTRIES CO., LTD.) after diluting the chemical agents to a concentration of 200 ml/L, 20 ml/L, 70 ml/L, and 10 ml/L, respectively, with water. Thus, a Pd plating film having a thickness of 0.05 µm was formed on the Ni plating film. The Pd plating film was crystalline with P as a co-deposited element as described below. It should be noted that the thickness of the Pdplating film was calculated from the immersion time based on the fact that a Pd plating film having a thickness of 0.01 µm was precipitated in separately performed electroless Pd plating treatment following the same manner at an immersion time of 1 min.

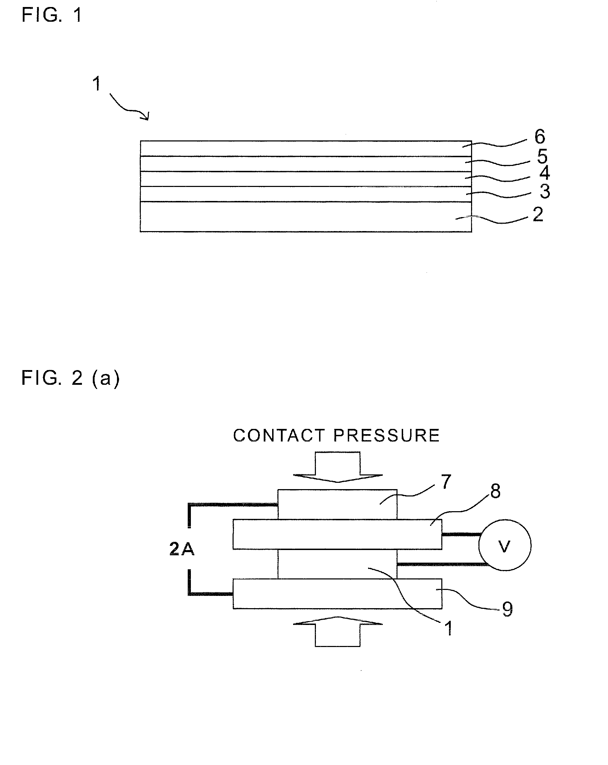

Next, after washed with water, the aluminum substrate was subjected to electroless Au plating treatment involving immersion at 90 °C for 45 min in an Au plating bath prepared by diluting an Au plating solution including 4 mass% of gold (I) potassium cyanide (trade name: OPC MUDEN GOLD manufactured by OKUNO CHEMICAL INDUSTRIES CO. , LTD.) to a concentration of 100 ml/L with water. Thus, a gold plating film having a thickness of 0.03 µm was formed on the Pd plating film by means of a displacement reaction with Ni in the Ni plating film. The aluminum substrate after the electroless Au plating treatment was washed with water, subsequently washed with hot-water, and then dried. Thus, as illustrated in FIG. 1, a test collector plate 1 according to Example of the present invention, including an Ni plating film 4, a Pd plating film 5, and an Au plating film 6 formed on one surface of an aluminum substrate 2 via a zinc layer formed by zincate treatment 3 was completed.

### [Measurement of contact resistance]

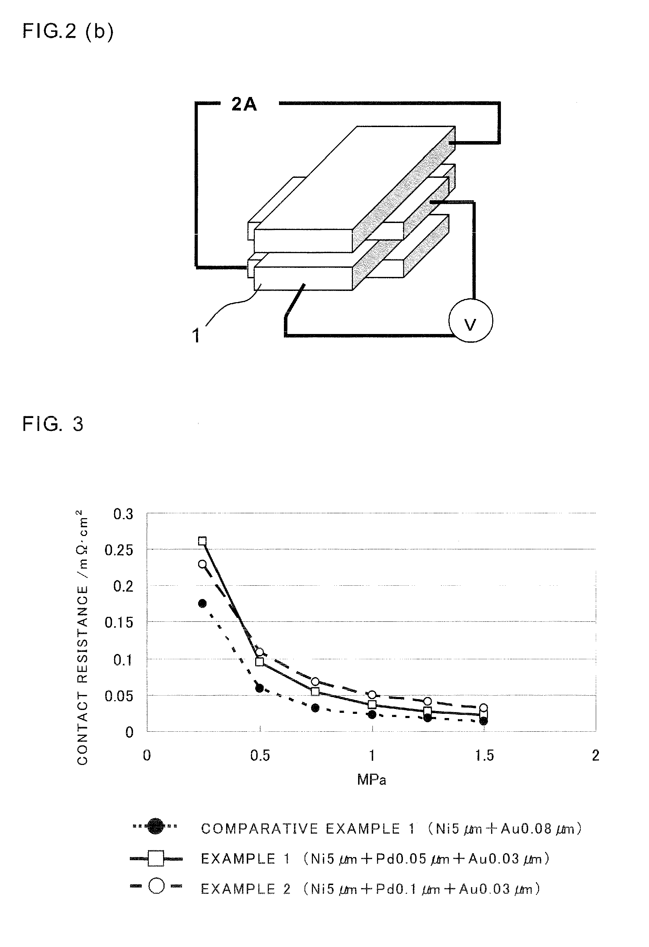

For the test collector plate obtained above, the contact resistance was measured as described below. As illustrated in FIG. 2 (a), the collector plate 1 on the Au plating film side was brought into contact with a comparative plate 8 and they were sandwiched between an upper plate 7 and a lower plate 9. The contact resistance of the test collector plate 1 was measured with applying contact pressure from the upper and lower directions. FIG. 3 shows the results. It should be noted that the upper plate 7, the comparative plate 8, and the lower plate 9 were each an aluminum plate (A5052 material) of 30 mm×60 mm×3 mm in thickness including an Au plating film having a thickness of 0.1 µm via an Ni plating film having a thickness of 5 µm on both surfaces thereof. As illustrated in FIG. 2(b), a sample for measurement of the contact resistance in which the plates and the test collector plate 1 were stacked alternately in the length and width directions was prepared and a contact surface area S between the test collector plate 1 and the comparative plate 8 was set to 3 mm×3 mm=9 cm². In addition, a current I of 2 A was applied between the upper plate 7 and the lower plate 9 and a voltage V between the test collector plate 1 and the comparative plate 8 was measured. The contact resistance (mΩ·cm²) was calculated by the equation R=V×S/I=V×9/2.

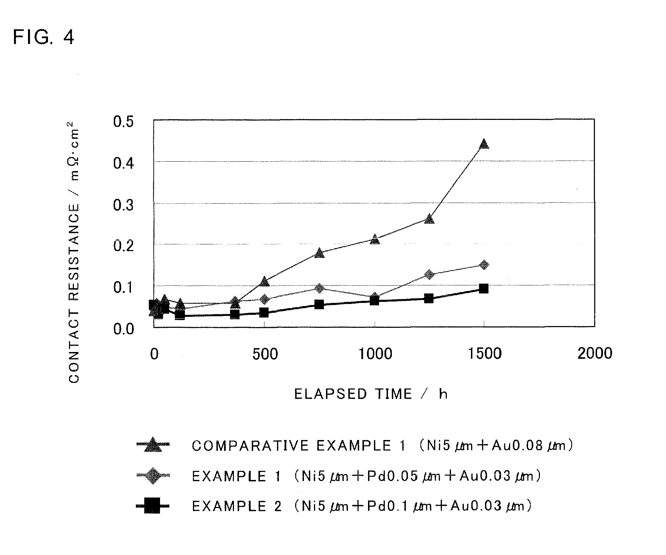

In general, contact resistance required for a collector plate for a fuel cell is about 10 mΩ·cm² at a contact pressure of 1 MPa in consideration of a normal usage condition. The results shown in FIG. 3 revealed that the test collector plate obtained in Example 1 had extremely satisfactory contact resistance. Moreover, the obtained test collector plate was placed in a constant-temperature and high-humidity tester and then subjected to a constant-temperature and high-humidity test by being retained in an environment of a temperature of 85°C and a humidity of 95% for 1,500 hr. With an elapsed time, the sample for measurement of the contact resistance was prepared and the contact resistance was measured at a contact pressure of 1 MPa. As a result, as shown in FIG. 4, the contact resistance of the test collector plate obtained in Example 1 was 0.15 mΩ·cm² even after the lapse of 1,500 hr, which was only increased by 300% as compared to the contact resistance immediately after production (0.05 mΩ·cm²) (the contact resistance after the lapse of 1,500 hr was 300 when the contact resistance immediately after production was defined as 100).

### [Corrosion current test]

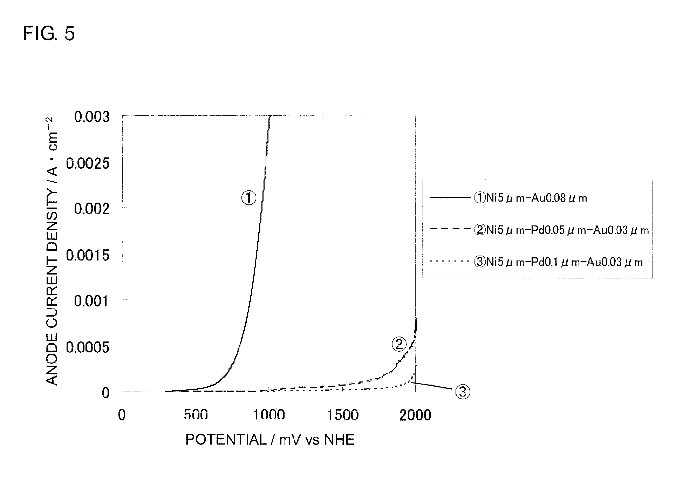

For a test collector plate obtained in the same manner as above, a corrosion current test was performed as described below. The test collector plate was placed in a 5 mass% sulfuric acid solution (400 ml, 30°C) so as to face a platinum counter electrode, and a saturated calomel electrode, which was used as a reference electrode, was immersed in a saturated potassium chloride solution. Then, a salt bridge was placed so as to connect the saturated potassium chloride solution and the test collector plate, and the collector plate, the platinum counter electrode, and the saturated calomel electrode were connected to a potentiostat. The corrosion current test was carried out by means of an evaluation method for electrochemical polarization characteristics in which a peak current of the collector plate per square centimeter of the Au plating film was measured as a polarization current with sweeping the potential of the collector plate to the anode side from a spontaneous electrode potential to 2 V against the saturated calomel electrode at a potential sweeping rate of 20 mV/min in a condition open to the atmosphere without agitation. As a result, as shown in FIG. 5, the anode current density measured at a potential of 1 V was 0.013 mA/cm², which confirmed that the collector plate had excellent corrosion resistance.

### [Nitric acid exposure test]

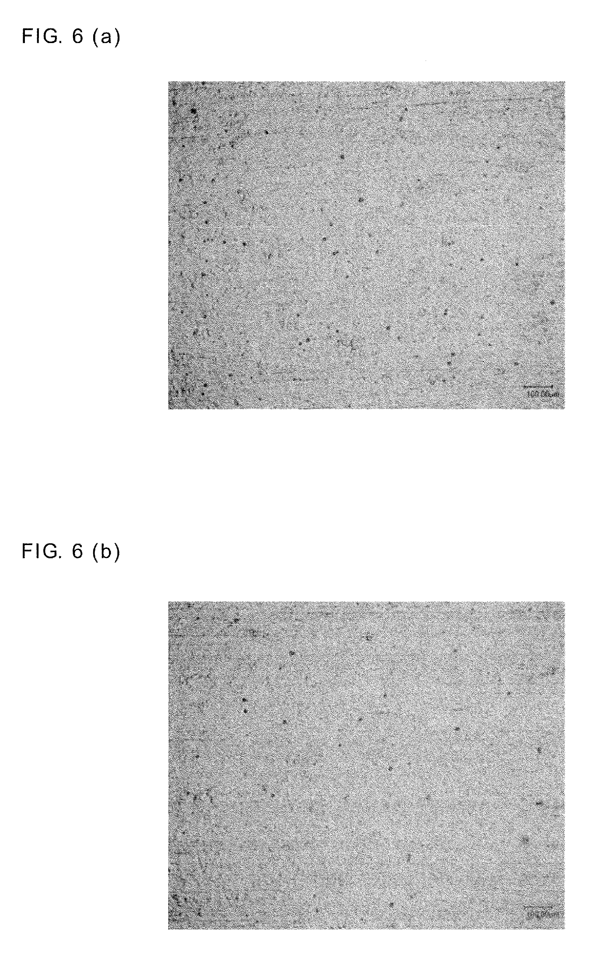

A test collector plate obtained in the same manner as above was subjected to a nitric acid exposure test in accordance with JIS-H8620 Appendix 1. First, contamination on the surface of the Au plating film was removed with ethanol just in case, followed by drying. After that, 5 ml of nitric acid were put into a 2 L desiccator at the bottom and the desiccator was covered with a lid after placing the obtained test collector plate therein on a porcelain plate. After left to stand at about 23 °C for 1 hr, the test collector plate was taken out and then washed with water calmly and dried. FIG. 6(a) is an optical micrograph of the Au plating film of the test collector plate before the test and FIG. 6(b) is an optical micrograph of the Au plating film after the test (both at a magnification of 300). Those photographs revealed that no particular appearance defect was observed on the Au plating film of the test collector plate even after the nitric acid exposure test.

### [EDX analysis and SEM observation]

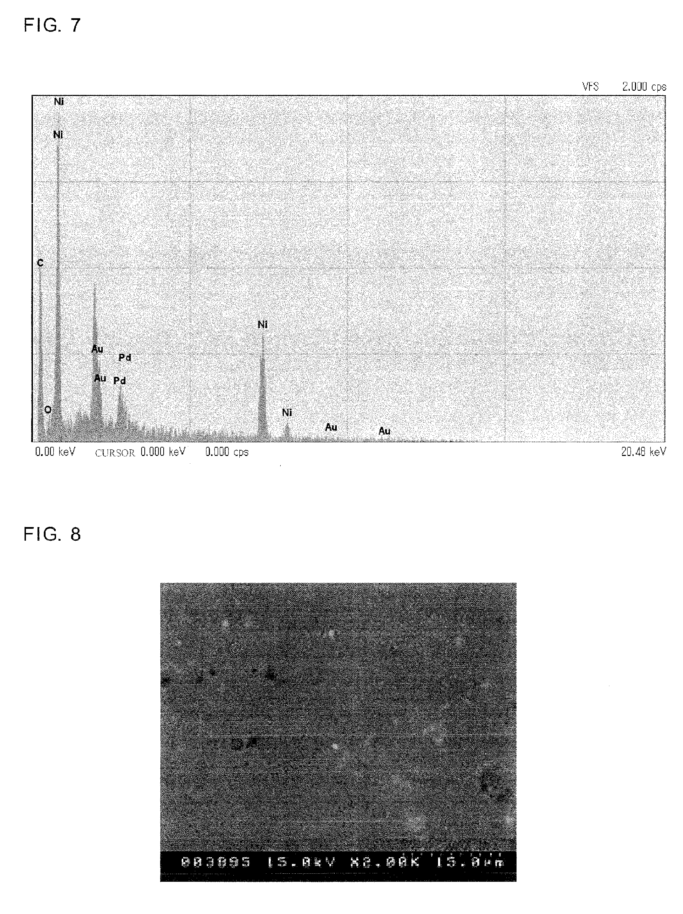

For a test collector plate obtained in the same manner as above, chemical compositions of compounds included in the plating films formed on the aluminum substrate were analyzed by using a scanning electron microscope (SEM) equipped with an EDX after leaving the test collector plate to stand in a constant-temperature and high-humidity environment of 85°C and a relative humidity of 95% for 750 hr. FIG. 7 shows the result of qualitative analysis and FIG. 8 shows the result of SEM observation for the Au plating film. It should be noted that an FE-SEM and an EDX (S-4500 and EMAX-7000 manufactured by Hitachi, Ltd.) were used for the measurement. The result of qualitative analysis shown in FIG. 7 was represented on count (-) as the ordinate and on energy (eV) as the abscissa. The SEM observation was carried out at an accelerating voltage of 15 kV and the photograph shown in FIG. 8 is one observed at a magnification of 2,000.

According to the result of EDX qualitative analysis shown in FIG. 7, O (oxygen) was hardly detected, which showed no evidence for formation of an oxide of Ni (NiO) based on an intensity ratio of Ni and O. In addition, in the SEM image shown in FIG. 8, no particular appearance defect was observed on the Au plating film. Those results revealed that an oxide of Ni, which increased the contact resistance, was not formed even in the plating films as well as on the surface of the Au plating film. It should be noted that Zn in the underlying film and Al in the base were not detected because the detection depth of EDX was about 1 µm and the thickness of the Ni plating film was as large as 5 µm.

### [Evaluation of Pd plating film]

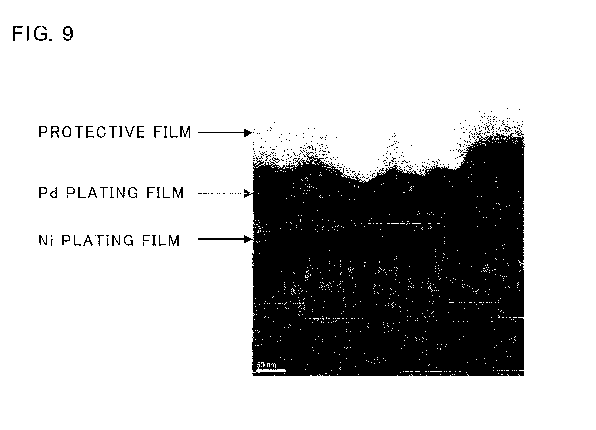

In the course of production of a test collector plate in the same manner as above, cross-section surfaces were observed by using a transmission electron microscope (TEM) (at a magnification of 45,000) when a Pd plating film having a thickness of 0.05 µm was formed by the electroless Pd plating treatment. After forming a resin protective film on the surface of the Pd plating film, a thin specimen was obtained by a focused ion beam (FIB) method and the cross-section surfaces of the Ni plating film and the Pd plating film were observed. FIG. 9 shows the result. This cross-section image revealed that the Ni plating film was amorphous. On the other hand, the image revealed that the Pd plating film was crystalline with grain boundaries.

Moreover, analysis of constituent elements of the Pd plating film using an electron probe micro analyzer (EPMA) revealed that the Pd plating film included 1 mass% of P as a co-deposited element. The analysis using the EPMA was carried out by using EPMA 1610 manufactured by SHIMADZU CORPORATION at an accelerating voltage of 15 kV.

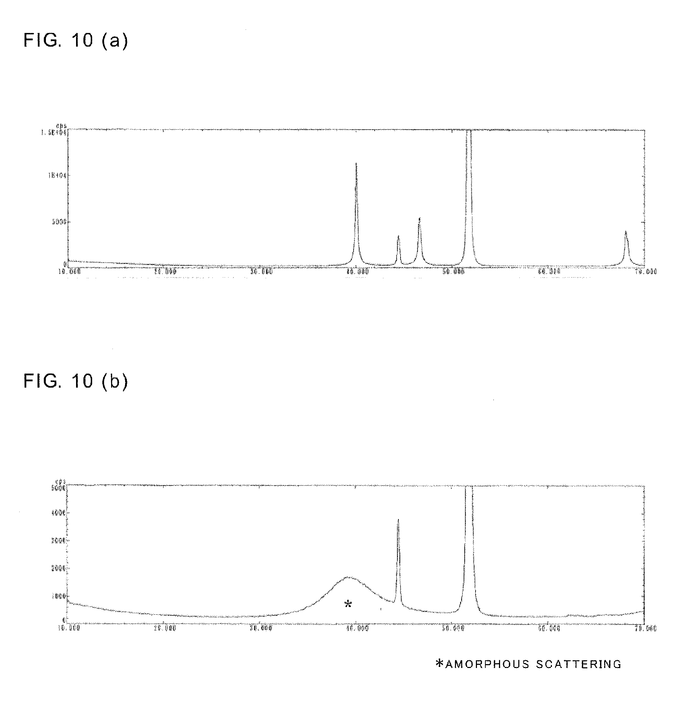

Further, for examining the effect of a co-deposited element included in the Pd plating film, the crystallinity of the Pd plating film was analyzed by XRD described below. First, an Ni plate separately prepared was subjected to electroless Pd plating treatment involving immersion at 60 °C for 5 min in the same Pd plating bath as in Example 1, thus forming a Pd plating film having a thickness of 0.05 µm and including 1 mass% of P as a co-deposited element on the Ni plate. Moreover, an Ni plate separately prepared was subjected to electroless Pd plating treatment involving immersion at 50°C for 12 min in a Pd plating bath prepared by mixing MUDEN NOBLE PD-1, MUDEN NOBLE PD-2, and MUDEN NOBLE PD-3 manufactured by OKUNO CHEMICAL INDUSTRIES CO., LTD. after diluting them to a concentration of 50 ml/L, 50 ml/L, 100 ml/L, respectively, with water, thus forming a Pd plating film having a thickness of 0.2 µm and including 5 mass% of P as a co-deposited element on the Ni plate. In this case, the Ni plate was used for avoiding overlapping of a diffraction peak for P with a diffraction peak for Ni. FIGS. 10 show the results of XRD analysis. In the case of the Pd plating film including 1% of P shown in FIG. 10(a), a sharp peak for Pd was observed at around a diffraction angle of 40°. On the other hand, in the case of the Pd plating film including 5% of P shown in FIG. 10(b), halo in X-ray scattering resulting from amorphous Pd was observed. This confirmed the effect of the content of a co-deposited element on the crystallinity of a noble metal plating film.

### (Comparative Example 1)

A test collector plate according to Comparative Example 1 was obtained in the same manner as in Example 1 except that, after forming the Ni plating film, an Au plating film having a thickness of 0.08 µm was formed without forming a Pd plating film (noble metal plating film). For the obtained test collector plate, evaluations were carried out in the same manner as in Example 1 as described below.

First, as shown in FIG. 3, the contact resistance immediately after production was lower than that of Example 1 for every contact pressure. However, as shown in FIG. 4, in the constant-temperature and high-humidity test, the contact resistance begun to increase after the lapse of about 500 hr, and reached 0.45 mΩ·cm² after the lapse of 1,500 hr, which was increased by 1,000% as compared to the contact resistance immediately after production (0.04 mΩ·cm²). Moreover, as shown in FIG. 5, the anode current density measured at a potential of 1 V in the corrosion current test was 2.8 mA/cm², which revealed that the test collector plate of Comparative Example 1 was inferior in corrosion resistance.

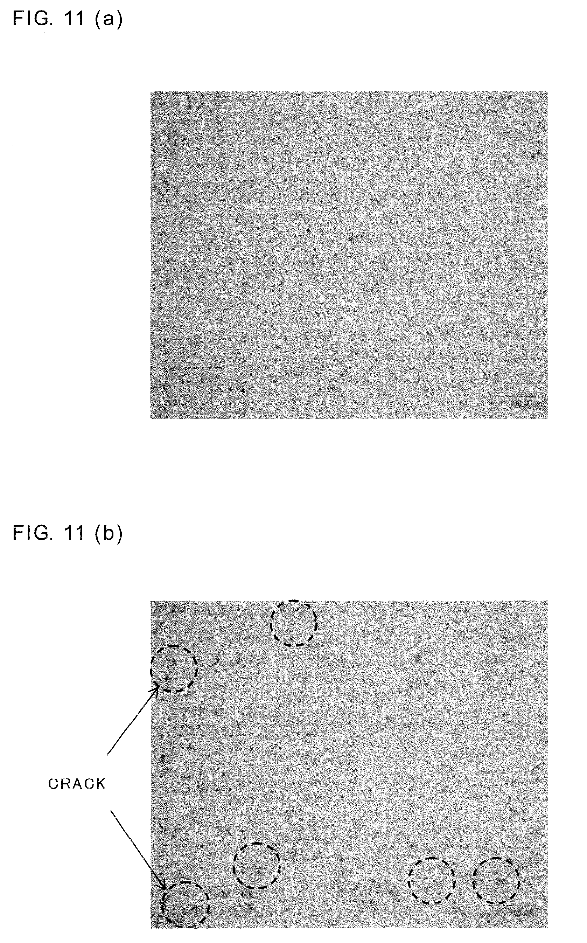

In addition, as shown in FIG. 11 (b), in the nitric acid exposure test, several cracks on the plating layer were observed in the Au plating film after the test. Moreover, there were some blisters on the surface of the Au plating film. The collector plate of Comparative Example 1 had a poor appearance of the Au plating film as compared to the collector plate obtained in Example 1.

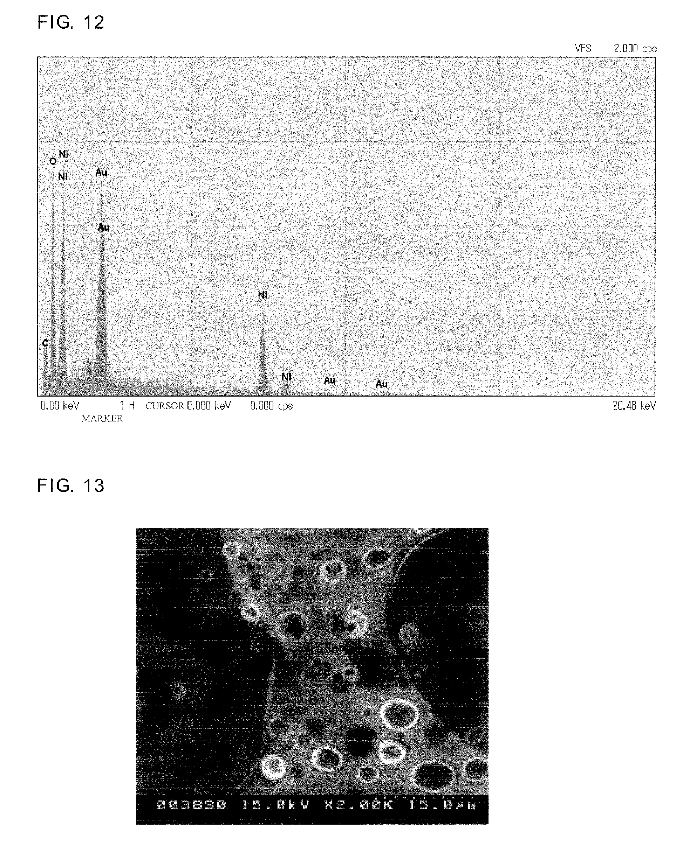

Further, for a test collector plate of Comparative Example 1 obtained in the same manner as above, chemical compositions of compounds included in the plating films formed on the aluminum substrate were analyzed by using a scanning electron microscope (SEM) equipped with an EDX after leaving the test collector plate to stand in a constant-temperature and high-humidity environment of 85°C and a relative humidity of 95% for 750 hr. FIG. 12 shows the result of EDX qualitative analysis and FIG. 13 shows the result of SEM observation. The SEM observation revealed that there were a large number of round blisters and wrinkles on the surface of the Au plating film. In addition, the EDX qualitative analysis revealed that a peak for O (oxygen) was clearly detected at about the same intensity ratio as Ni, which indicated formation of an oxide of Ni, NiO. Comparison with the result of EDX analysis of Example 1 indicated that the wrinkles and blisters on the Au plating film of the test collector plate according to Comparative Example 1 were caused by precipitation of an oxide of Ni.

### (Example 2)

A test collector plate according to Example 2 was obtained in the same manner as in Example 1 except that a Pd plating film having a thickness of 0.1 µm was formed on the Ni plating film by electroless Pd plating treatment involving immersion in the Pd plating bath at 60°C for 10 min. For the obtained test collector plate, evaluations were carried out in the same manner as in Example 1 as described below.

As shown in FIG. 3, the contact resistance immediately after production was lower than contact resistance generally required for a collector plate for a fuel cell at every contact pressure. In addition, as shown in FIG. 4, the contact resistance of the test collector plate obtained in Example 2 was 0.09 mΩ·cm² even after the lapse of 1,500 hr, which was only increased by 180% as compared to the contact resistance immediately after production (0.05 mΩ·cm²). Moreover, as shown in FIG. 5, the anode current density measured at a potential of 1 V in the corrosion current test was 0.0028 mA/cm², which revealed that the collector plate of Example 2 had excellent corrosion resistance.

In addition, no change was observed in the appearance of the Au plating film between before and after the nitric acid exposure test. Further, EDX qualitative analysis of the obtained test collector plate after leaving the test collector plate to stand in a constant-temperature and high-humidity environment of 85°C and a relative humidity of 95% for 750 hr did not indicate formation of an oxide of Ni (NiO), as in Example 1. In SEM observation as well, no particular appearance defect was observed on the Au plating film.

In addition, in the course of production of the test collector plate of Example 2, cross-section surfaces were observed by using TEM in the same manner as in Example 1 when the Pd plating film having a thickness of 0.1 µm was formed by the electroless Pd plating treatment. It was confirmed that the Pd plating film was crystalline with grain boundaries.

### (Example 3 and Comparative Examples 2 and 3)

Test collector plates of Example 3 and Comparative Examples 2 and 3 were each produced by using, as an aluminum substrate, an AA5252 material of 30 mm×60 mm×3 mm in thickness and forming plating films as shown in Table 1. That is, Example 3 was the same as Example 1 except that the above-mentioned aluminum substrate was used, and a test collector plate showing almost the same evaluation results as in Example 1 was obtained.

On the other hand, each of Comparative Examples 2 and 3 was the same as Comparative Example 1 except that the thickness of the Au plating film was changed in addition to the change of the aluminum substrate. In the constant-temperature and high-humidity test, the contact resistance after the lapse of 1,500 hr was increased by 1,000% or more as compared to the contact resistance immediately after production for each of the test collector plates. In addition, the corrosion current test revealed that the test collector plates were inferior in corrosion resistance. Further, SEM observation of the Au plating film after leaving the test collector plate to stand in a constant-temperature and high-humidity environment at 85°C and a relative humidity of 95% for 750 hr confirmed the presence of a large number of blisters and wrinkles. Further, after the nitric acid exposure test, cracks and peeled marks were observed on the Au plating film and the test collector plate had a poor appearance.

**[Table 1]**

| | Aluminum substrate | Thickness of plating film (µm) | | | Contact resistance (mΩ·cm²) | | Current density (mA/cm²) at anode polarization of 1 V | Appearance of Au plating film | |
|---|---|---|---|---|---|---|---|---|---|
| | | Ni | Pd | Au | Immediately after production | After constant-tempe rature and high-humidity test | | After 750 hr at 85°c and 95%RH | After nitric acid exposure test |
| Example 1 | A5052 | 5 | 0.05 | 0.03 | 0.05 | 0.15 | 0.013 | No change | No change |
| Example 2 | A5052 | 5 | 0.1 | 0.03 | 0.05 | 0.09 | 0.0028 | No change | No change |
| Example 3 | AA5252 | 5 | 0.05 | 0.03 | 0.04 | 0.13 | 0.011 | No change | No change |
| Comparative Example 1 | A5052 | 5 | - | 0.08 | 0.04 | 0.45 | 2.8 | Presence of blisters and wrinkles | Presence of cracks and peeling |
| Comparative Example 2 | AA5252 | 5 | - | 0.03 | 0.06 | 0.63 | 2.9 | Presence of blisters and wrinkles | Presence of cracks and peeling |
| Comparative Example 3 | AA5252 | 5 | - | 0.05 | 0.04 | 0.46 | 2.7 | Presence of blisters and wrinkles | Presence of cracks and peeling |

### (Reference Example 1)

### [Evaluation of sacrificial anode action of aluminum substrate]

For confirming the sacrificial anode action of the aluminum substrate in the collector plate of the present invention, the following experiment was carried out. For a test collector plate obtained in the same manner as in Example 1, a back surface of the aluminum substrate (a surface opposite to the surface having the plating films) and outer end surfaces were masked with a polytetrafluoroethylene (PTFE) masking material having a thickness of 0.05 mm so that only the surface of the Au plating film was exposed. The comparative sample avoiding any exposure of the aluminum substrate and a test collector plate obtained in the same manner as in Example 1 (without a mask) were placed in a desiccator as in Example 1 at the same time, and then subjected to the nitric acid exposure test.

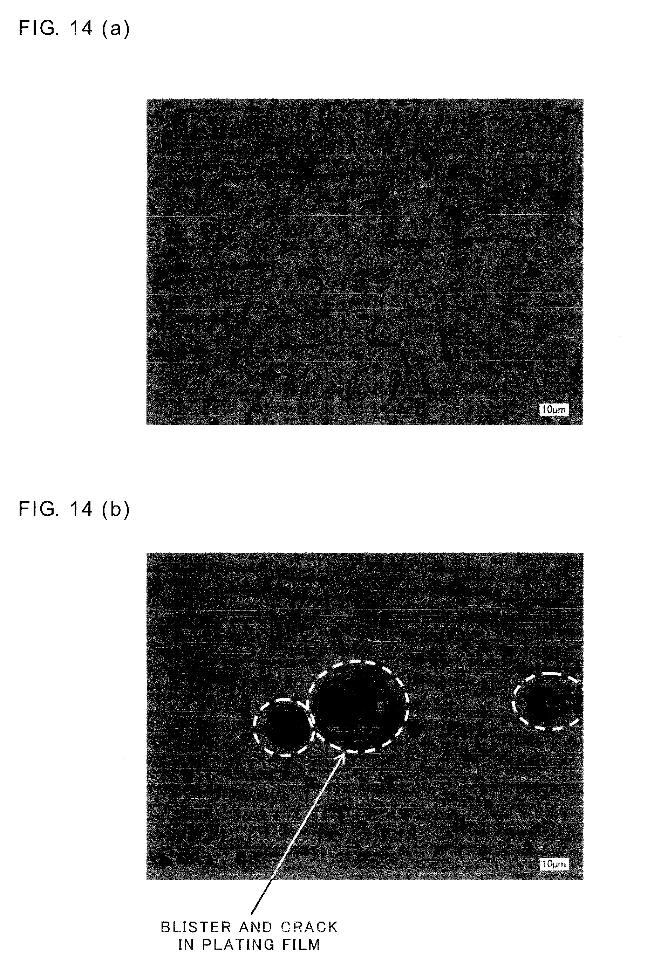

FIG. 14(a) is an optical micrograph of the Au plating film of the test collector plate obtained in the same manner as in Example 1, which showed no change in appearance. On the other hand, FIG. 14 (b) is that in the case of the comparative sample in which the aluminum substrate was masked, which partially showed blisters and fine cracks on the Au plating film. In consideration of the results obtained in Examples and Comparative Examples, it is found that, in the collector plate of the present invention in which the plating films are formed on one surface of the aluminum substrate, oxidation of Ni can be suppressed by means of the sacrificial anode action of the aluminum substrate.

### Reference Signs List

1: test collector plate, 2: aluminum substrate, 3: zinc layer formed by zincate treatment, 4: Ni plating film, 5: noble metal plating film, 6: Auplating film, 7: upperplate, 8: comparative plate, 9: lower plate.

## Claims

1. A collector plate for a fuel cell, which is provided on both ends of a cell stack in which a plurality of fuel cell units are stacked, and is used for collecting current, the collector plate comprising:
an aluminum substrate formed of aluminum or an aluminum alloy; and
an Ni plating film;
a noble metal plating film comprising one or more noble metals selected from the group consisting of Pd, Pt, Ag, Rh, Ir, Os, and Ru; and
an Au plating film,
the films being formed on one surface of the aluminum substrate.

2. A collector plate for a fuel cell according to claim 1, wherein the noble metal plating film is crystalline and the Au plating film is formed by electroless plating treatment utilizing a displacement reaction with Ni in the Ni plating film.

3. A collector plate for a fuel cell according to claim 2, wherein the noble metal plating film comprises 0 to 3 mass% of one or more co-deposited elements selected from the group consisting of P, B, and W.

4. A collector plate for a fuel cell according to any one of claims 1 to 3, wherein a thickness of the noble metal plating film is from 0.01 µm to 0.1 µm and a thickness of the Au plating film is from 0.01 µm to 0.1 µm.

5. A collector plate for a fuel cell according to any one of claims 1 to 4, wherein a surface of the Au plating film is substantially free of NiO.

6. A collector plate for a fuel cell according to any one of claims 1 to 5, wherein the aluminum substrate is formed of a 5000 series aluminum alloy.

7. A method of producing a collector plate for a fuel cell, which is provided on both ends of a cell stack in which a plurality of fuel cell units are stacked and is used for collecting current, the method comprising the steps of:
subjecting an aluminum substrate formed of aluminum or an aluminum alloy to zinc substitution treatment by immersing the aluminum substrate in a zincate treatment bath;
forming an Ni plating film on one surface of the obtained aluminum substrate;
forming a noble metal plating film comprising one or more noble metals selected from the group consisting of Pd, Pt, Ag, Rh, Ir, Os, and Ru on the Ni plating film; and
forming an Au plating film on the noble metal plating film.

8. A method of producing a collector plate for a fuel cell according to claim 7, wherein the step of forming a noble metal plating film comprises forming a crystalline noble metal plating film and the step of forming an Au plating film comprises forming an Au plating film by electroless plating treatment utilizing a displacement reaction with Ni in the Ni plating film.

9. A method of producing a collector plate for a fuel cell according to claim 8, wherein the noble metal plating film comprises 0 to 3 mass% of one or more co-deposited elements selected from the group consisting of P, B, and W.

10. A method of producing a collector plate for a fuel cell according to any one of claims 7 to 9, wherein a thickness of the noble metal plating film is from 0.01 µm to 0.1 µm and a thickness of the Au plating film is from 0.01 µm to 0.1 µm.

11. A method of producing a collector plate for a fuel cell according to any one of claims 7 to 10, wherein the step of forming an Ni plating film, the step of forming a noble metal plating film, and the step of forming an Au plating film are each conducted by electroless plating treatment.

12. A method of producing a collector plate for a fuel cell according to any one of claims 7 to 11, wherein the aluminum substrate is formed of a 5000 series aluminum alloy.
